# EUROPÄISCHE PATENTSCHRIFT

(11) **EP 2 470 042 B1**
(45) Veröffentlichungstag und Bekanntmachung des Hinweises auf die Patenterteilung: **23.07.2014**
(21) Anmeldenummer: 10744597.5
(22) Anmeldetag: 20.08.2010
(51) Int. Cl.: A44B 15/00, A45C 13/20, F16M 13/04, G03B 17/56

(54) **VORRICHTUNG ZUM LÖSBAREN BEFESTIGEN EINER KAMERA AN EINEM TRAGERIEMEN**
DEVICE FOR DETACHABLY FASTENING A CAMERA TO A CARRYING STRAP
DISPOSITIF DE FIXATION LIBÉRABLE D'UNE CAMÉRA SUR UNE SANGLE DE SUPPORT

(30) Priorität: 25.08.2009 DE 202009011443 U; 25.08.2009 DE 202009011442 U
(43) Veröffentlichungstag der Anmeldung: 04.07.2012
(73) Patentinhaber: Geller, Wolfgang-Peter, 21376 Garlstorf (DE)
(72) Erfinder: Geller, Wolfgang-Peter, 21376 Garlstorf (DE)
(74) Vertreter: Raffay & Fleck
(86) Internationale Anmeldenummer: PCT/EP2010/062157
(87) Internationale Veröffentlichungsnummer: WO 2011/023633

(56) Entgegenhaltungen:
- US-A- 3 305 148
- US-A- 4 328 917

## Beschreibung

### Technisches Gebiet

Die Erfindung betrifft eine Vorrichtung zum lösbaren Befestigen einer Kamera an einem Trageriemen, vorzugsweise einem quer über eine Schulter zu tragenden Trageriemen.

### Stand der Technik

Es ist bekannt, dass Kameras, sowohl Fotoapparate als auch Filmkameras, an Trageriemen getragen werden. Dabei gibt es grundsätzlich zwei verschiedene Trageweisen, zum einen Nackentrageriemen, die um den Hals und Nackenbereich geführt werden und an denen die Kamera vor der Brust getragen wird. Zum anderen sind schräg oder gerade über der Schulter getragene Systeme bekannt, bei denen der Trageriemen über die Schulter geführt ist und die an dem Riemen getragene Kamera seitlich am Körper herabhängt. Erstgenannte Riemen bzw. Tragesysteme sind insbesondere bei schweren Kameras nicht zu bevorzugen, da das Gewicht der Kamera auf dem empfindlichen Nacken lastet und dort Schmerzen hervorrufen kann (Siehe US 4 328 917 and US 3 305 148).

Es ist insbesondere aus der WO 2008/131135 A1 ein Kameratrageriemen bekannt, der quer über die Schulter zu tragen ist und der einen Schraubadapter zum Einschrauben in die Stativschraubenbuchse an der Kamera aufweist, welcher Einschraubadapter über eine Öse in Längsrichtung des Trageriemens verschiebbar geführt ist. Dieser Trageriemen hat den Vorteil, dass die daran getragene Kamera einerseits sehr bequem seitlich am Körper getragen wird, wobei das Gewicht der Kamera auf der zum Tragen von Lasten widerstandfähigeren Schulter ruht und nicht im Nackenbereich, dass andererseits ein schnelles Heranführen der Kamera vor das Auge und sicheres Positionieren derselben möglich ist. Dies ermöglichst insbesondere ein schnelles Fotografieren, wie es beispielsweise in bewegten Situationen, z.B. in der Sportfotografie, Wildlifefotografie und bei Schnappschüssen, erforderlich ist.

Ein wie dort gezeigtes System hat sich in der Praxis letztlich bewährt. Allerdings gibt es Situationen, in denen neben einer Kamera weitere Utensilien oder Gegenstände mitgeführt werden, die an über die Schulter geführten Trageriemen aufgehängt sind. Zu solchen Gegenständen gehören z.B. Handtaschen, Phototaschen oder dgl. Dann ist es schwerlings bis nicht möglich, zusätzlich zu dem Trageriemen der Handtasche, Phototasche oder des vergleichbaren Gegenstandes einen weiteren gesonderten Trageriemen für die Kamera über die Schulter zu führen. Von den Benutzern wird eine solche Lösung als unhandlich und nicht praktikabel angesehen. Hier wird dann in der Regel zurückgegriffen auf den "klassischen" Kameratrageriemen, der um den Nacken geführt wird und bei dem die Kamera vor der Brust getragen wird. Dies führt dann letztlich wieder zu den oben bereits angedeuteten Nachteilen, die sich insbesondere bei schweren Kameras, wie z.B. Spiegelreflexkameras mit Objektiven großer Brennweite, bemerkbar machen.

### Darstellung der Erfindung

Hier soll mit der Erfindung Abhilfe geschaffen werden, indem eine Möglichkeit zu finden gesucht wird, auch bei bereits über Trageriemen mitgeführten Gegenständen einem Kameranutzer einen ähnlichen Tragekomfort und Nutzen zu ermöglichen, wie dieser durch den in der eingangs genannten WO 2008/101135 A1 beschriebenen Kamerariemen gegeben ist, ohne dass ein weiterer Trageriemen eingesetzt werden muss.

Gelöst wird diese Aufgabe durch eine Vorrichtung zum lösbaren Befestigen einer Kamera an einem Trageriemen, vorzugsweise einem quer über einer Schulter zu tragenden Trageriemen mit den Merkmalen des Schutzanspruchs 1. Vorteilhafte Weiterbildungen dieser Vorrichtung sind in den abhängigen Ansprüchen 2 bis 15 angegeben.

Die erfindungsgemäße Vorrichtung zeichnet sich aus durch die drei wesentlichen Elemente eines Ösenstückes mit einer Öse, einer an dem Ösenstück festgelegten flexiblen Verlängerung sowie eines als Stativschraube ausgebildeten Befestigungselementes zum Festlegen an der Kamera, welches an einem dem Ösenstück abgewandten Ende der flexiblen Verlängerung angeordnet ist. Das Besondere an der Öse des Ösenstückes ist dabei, dass diese in ihrem umlaufenden Rand eine Öffnung aufweist, durch die ein insbesondere zu einem anderen System gehörender, Trageriemen, z.B. der Trageriemen einer Handtasche oder Kameratasche, hindurchgefädelt werden kann und die entweder verschließbar oder so klein dimensioniert ist, dass der Trageriemen nicht unbeabsichtigt wieder durch diese Durchführöffnung hinaus gleitet.

Eine so gestaltete Vorrichtung kann in einfacher Weise mit dem Trageriemen eines anderen zu tragenden Gegenstandes (oder auch allgemein mit einem Trageriemen) verbunden werden und sitzt so sicher, dass er sich von dem Trageriemen nach bestimmungsgemäßer Verbindung nicht ohne weiteres, insbesondere nicht unabsichtlich löst. Durch die Öse, durch die der Trageriemen hindurchgeführt ist, ist die Vorrichtung insgesamt in Längsrichtung des Trageriemens verschiebbar und kann so in ähnlicher Weise wie der in der WO 2008/131135 A1 beschriebene Kameraanschluss des dortigen Tragesystems, entlang des Trageriemens gleitend bewegt werden.

Die flexible Verlängerung, die einerseits an dem Ösenstück, andererseits an dem Befestigungselement angeordnet ist, besorgt, dass bei einem Ergreifen der Kamera aus der Trageposition und Hochführen derselben vor das Gesicht ausreichend Bewegungsfreiheit und -spielraum verbleibt, um die Kamera sicher zu positionieren. Denn, wenn an dem Trageriemen ein anderer Gegenstand, wie eben eine Handtasche, eine Phototasche oder dgl., mit seinem Gewicht hängt, so wird der Trageriemen selbst einer die Kamera aufwärts führenden Bewegung nicht folgen, sondern mehr oder minder straff gespannt in seiner insbesondere quer über Brust und Rücken verlaufenden Ausrichtung bleiben. Nur mit einer wie in der Erfindung vorgesehenen flexiblen Verlängerung kann also das letzte Ende zwischen dem Trageriemen in seiner Position, in der nach dem Aufwärtsführen der Kamera die Öse zum Stehen kommt, und dem Bereich vor dem Gesicht, in dem die Kamera gehalten wird, überbrückt werden.

Die Öse weist vorteilhafterweise einen geraden und steifen Abschnitt auf, der so angeordnet ist, dass er bei eingelegtem Trageriemen beim Tragen des Trageriemen zwischen Trageriemen und Träger zu liegen kommt. Vorteilhafterweise weist der gerade Abschnitt an beiden Enden jeweils einen gebogenen Abschnitt auf, so dass sich die Form einer flachen Schale ergibt. Dabei verlaufen die gebogenen Abschnitte an ihren Enden vorteilhafter weise parallel zueinander und senkrecht zum geraden Abschnitt. Ein solcher Abschnitt verbessert die Gleitfähigkeit der Öse über den Trageriemen. Mit Vorteil kann auch der gesamte umlaufende Rand steif ausgeführt werden. Die Öse kann durch weitere steife oder flexible Abschnitte vervollständigt sein. Die Durchführöffnung kann beispielsweise an der Verbindungsstelle von verschiedenen Ösenabschnitten dadurch realisiert sein, dass jeweils ein Ende von zwei aneinandergrenzenden Abschnitten voneinander lösbar ausgebildet ist.

Die Öse kann, wie bereits oben angedeutet, eine einfache und unverschlossene Öffnung aufweisen, wenn diese derart schmal ist, dass ein unabsichtliches Herausrutschen des Trageriemens aus der Öse nicht geschehen kann. In einem solchen Fall wird die Öffnung in der Öse eine solche Öffnungsweite aufweisen, die im Wesentlichen der Dicke eines in seiner Breite deutlich größer als in seiner Dicke dimensionierten Trageriemens entsprechen, so dass dieser mit einer Schmalkante voran in die Öse eingefädelt werden kann, wenn er dann mit seiner Breitseite in der Öse vor der Öffnung liegt, jedoch nicht mehr aus dieser herausrutschen kann. Dabei ist sicherzustellen, dass das Material der Öse ausreichend stabil ist, und dass insbesondere unter dem Gewicht der an der Vorrichtung befestigten Kamera das Material der Öse sich nicht verformt und die Öffnung in der Öse nicht gespreizt wird, da ansonsten die Gefahr eines unbeabsichtigten Ablösens der Vorrichtung von dem Trageriemen und damit ein Sturz der wertvollen Kamera geschehen könnte.

Vorteilhafterweise ist die Durchführöffnung zum seitlichen einfädeln des Trageriemens in die Öse angeordnet. In diesem Fall ist das Einfädeln besonders leicht durchzuführen. Ein Anordnen der Durchführöffnung auf der beim Tragen vom Träger abgewandten Seite ist besonders sicher gegenüber unbeabsichtigtem Herausrutschen.

Sicherer und zu bevorzugen sind solche Ösen, die sicher verschließbare Öffnungen aufweisen. Ein solcher Verschluss kann dabei z.B. in der Art eines Karabiners bzw. Karabinerhakens sein, mit einem gelenkig gelagerten Verschlusssteg, der in einer Schließstellung sicher mit dem feststehenden Bereich des Ösenrahmens bzw. -randes in Eingriff gelangt. Ein solcher Karabiner sollte dabei vorzugsweise ins Innere der Öse öffnen, da er so bei in die Öse eingefädeltem Trageriemen und an der Vorrichtung angeschlagener Kamera durch das Gewicht der Kamera zusätzlich in Schließstellung gedrückt wird.

Eine weitere, sehr zuverlässige Möglichkeit, einen sicheren Verschluss der Durchführöffnung zu erhalten, besteht darin, eine Schiebehülse vorzusehen, die zum Öffnen der Durchführöffnung auf einen der angrenzenden Abschnitte des Ösenrandes aufgeschoben und zum Schließen der Öffnung über die Öffnung geschoben und mit dem zweiten angrenzenden Abschnitt des Ösenrandes verbunden werden kann. Insbesondere eignet sich hierbei eine Schraubverbindung, wobei in der Schiebeöse wenigstens ein Innengewinde vorgesehen ist und ein hierzu korrespondierendes Außengewinde auf dem an die Öffnung angrenzenden Abschnitt des Ösenrandes, mit dem die Schiebehülse in der Schließstellung verschraubt werden kann.

Alternativ oder zusätzlich kann die Schiebehülse so federbelastet ausgebildet werden, dass sie im Ruhezustand die Durchführöffnung verschließt.

Ebenfalls möglich ist es, die Öse nach Art eines Schlüsselringes zu gestalten also mit offenen Enden, die übereinander liegen und durch Federspannung in einer eng anliegenden Schließstellung gehalten werden, zum Öffnen jedoch gegeneinander spreizbar sind.

Vorteilhafterweise sind solch Sicherungselemente für die Durchführöffnung zusammen mit der Durchführöffnung abseits des Abschnitts des umlaufenden Randes, der bei eingefädeltem Trageriemen und angelegtem Trageriemen zwischen Träger und Gurt zu liegen kommt, angeordnet. Dadurch wird das gleiten der Öse über den Trageriemen erleichtert und für den Träger angenehmer. Auch ist ein Verhaken der Durchführöffnung und/oder der Sicherungselement mit der Kleidung bei einer solchen Anordnung deutlich unwahrscheinlicher.

Bevorzugt weist die Öse, die grundsätzlich alle Formen, z.B. auch rund, oval oder allgemein drei- und mehreckig, einnehmen kann, eine im Wesentlichen rechteckige Form auf. In dieser Form passt sich die Öse bestens an flache Trageriemen an, über die sie dann im Einsatz vergleichsweise widerstandsfrei hinweg gleiten kann. Eine weitere bevorzugte Form ist eine Ausbildung des umlaufenden Randes der Öse in einer steigbügelartigen Form, also mit einem geraden Abschnitt an den sich an beiden Enden ein gebogener Abschnitt anschließt. Dabei kommt der gerade Abschnitt zwischen Trageriemen und Träger zu liegen und ist die flexible Verlängerung auf gegenüber dem geraden Abschnitt angeordnet. Vorteilhafterweise ist eine solche Öse spiegelsymmetrisch zu einer Geraden senkrecht durch den geraden Abschnitt.

Die flexible Verlängerung ist mit Vorteil ein Band oder Riemen, der aus einem textilen Material, aus Leder, aus Kunstleder, aus Kunststoff, aus Metall, auch Edelmetall, aus gegeneinander beweglichen Metallsegmenten, auch Edelmetallsegmenten und/oder Kunststoffsegmenten bestehen kann. Der Riemen bzw. das Band kann insbesondere auch elastisch sein. Als geeignete Längen der flexiblen Verlängerung haben sich Längen zwischen 8 cm und 20 cm, insbesondere zwischen 10 cm und 15 cm erwiesen. Um eine Anpassung an die jeweiligen Verhältnisse, z.B. an die Art des Trageriemens bzw. der an dem Trageriemen befestigten Tasche oder anderen Utensilien vornehmen zu können, ist es von Vorteil, wenn die flexible Verlängerung ein Mittel zum Verstellen ihrer Länge aufweist. Denn je nach Schnitt des Trageriemens und eingestellter Länge desselben können unterschiedliche Längen der Verlängerung sich als geeignet bzw. ideal erweisen.

Die Handhabung der erfindungsgemäßen Vorrichtung wird vereinfacht, wenn zwischen dem Ösenstück und der Verlängerung ein Drehgelenk angeordnet ist. Ein solches Drehgelenk kann Drehbewegungen der flexiblen Verlängerung um deren Längsachse ausführen, ohne dass die flexible Verlängerung verdrillt.

Alternativ oder zusätzlich kann ein solches Drehgelenk auch in der Verbindung zwischen der Verlängerung und dem Befestigungselement vorgesehen sein.

Das Befestigungselement schließlich ist mit besonderem Vorteil eine Schraube zum Einschrauben in die Stativschraubenhülse an der Kamera. Diese Art des Befestigungselementes birgt zwei Vorteile:

Zum einen ist die so herzustellende Schraubverbindung mit der Kamera eine besonders sichere, so dass ein unbeabsichtigtes Lösen der Kamera von der erfindungsgemäßen Vorrichtung ausgeschlossen werden kann. Zum anderen befindet sich die Stativschraubenhülse in der Regel auf der Unterseite der Kamera, so dass die Kamera im Transportfall kopfüber hängend transportiert wird, in der Regel seitlich am Körper, und bei Gebrauch lediglich ergriffen und in einer Schwenkbewegung, bei der die Kamera um 180° gedreht wird, vor das Gesicht und in "Schussposition" geführt werden muss.

Insbesondere, wenn das Befestigungselement wie erwähnt eine Schraube zum Einschrauben in die Stativschraubenhülse einer Kamera ist, ist ein Drehgelenk in der Verbindung zwischen der Verlängerung und dem Befestigungselement von Vorteil, da die Schraube ohne ein Verdrillen der Verlängerung in die Stativschraubenhülse an der Kamera eingeschraubt werden kann. Dadurch wird auch ein versehentliches Herausschrauben durch Bewegung der Kamera oder der flexiblen Verlängerung verhindert. Solche Bewegungen treten beim Gehen unvermeidlich auf. Sie induzieren üblicherweise auch Pendelbewegungen der Kamera, die durch ein solches Drehgelenk verringert werden können. Das Drehelement kann dabei ein Kugellager sein.

Insbesondere kann ein Drehgelenk, insbesondere ein Kugellager, zwischen einem Schraubenkopf und einem Gewindeabschnitt der Schraube so angeordnet sein, dass seine Drehachse mit der Drehachse des Gewindeabschnitts übereinstimmt. Vorteilhafterweise weist die Schraube zwischen Drehgelenk und Gewindeabschnitt eine, insbesondere runde und scheibenförmige, Andruckplatte auf, die mit der Schraube fest verbunden ist und beim Einschrauben der Schraube als Andruckfläche an der Kamera dient. Eine solche Andruckplatte sorgt dafür, dass die Andruckkraft nicht auf das Drehgelenk wirkt. Durch die beschriebene Anordnung von Andruckplatte, Drehgelenk und Schraubenkopf ist zudem eine einfache Bedienung des Schraubenkopfes möglich. Darüber hinaus kann eine flexible Zwischenlage, beispielsweise eine Gummischeibe, so angeordnet sein, dass sie in eingeschraubtem Zustand der Schraube zwischen Andruckplatte und Kamera zu liegen kommt.

An einem Äußeren Bauteil des Drehgelenks beziehungsweise einem Außenring des Kugellagers kann eine Festlegevorrichtung für das flexible Element vorgesehen werden. Die Festlegevorrichtung kann durch einen Bügel, insbesondere einen um die Befestigungspunkte des Bügels am Außenring schwenkbaren, gebildet werden. Dabei wird der Bügel vorteilhafterweise an zwei diametral einander gegenüberliegenden Punkten auf dem Außenring befestigt und ist der Bügel so ausgebildet, dass er über den Schraubenkopf hin und her geschwenkt werden kann. Dies ermöglicht ein einfaches Bedienen des Schraubenkopfes und ein Aufstellen der Kamera auf den vorteilhafterweise eben ausgeführten Schraubenkopf.

Des Weiteren kann das flexible Element ein dämpfendes Element, insbesondere einen Schockabsorber, aufweisen. Dies verhindert die Übertragung von Stößen über das flexible Element auf die Kamera und kann durch dämpfen der durch Gehen induzierten Bewegung ein Pendeln der Kamera reduzieren.

Zur Sicherung des Trageriemens in der Öse können auch mehrere Ösenstücke, insbesondere zwei Ösenstücke, vorgesehen sein, die mit dem flexiblen Element, insbesondere an einem Ende des flexiblen Elements, verbunden sind. Dabei sind die Durchführöffnungen der Ösen so angeordnet, dass der Trageriemen von zwei unterschiedlichen, insbesondere entgegen gesetzten Richtungen, insbesondere von zwei Seiten, in die Ösen eingeführt werden muss. Mit Vorteil sind die Ösenstücke so an der flexiblen Verlängerung angeordnet, dass sie bei eingefädeltem Trageriemen aufeinander beziehungsweise nebeneinander zu liegen kommen. Vorteilhafterweise sind die Durchführöffnungen so in den umlaufenden Rändern angeordnet, dass Sie nicht in Deckung liegen. Vorteilhafterweise liegen sie möglichst weit voneinander entfernt, insbesondere auf unterschiedlichen Seiten der Öse.

Bei zwei Ösenstücken können diese beispielsweise an einer Schlaufe der flexiblen Verlängerung gemeinsam befestigt sein und so ausgebildet sein, dass sie mit Ausnahme der Durchführöffnung bei in beide Ösen eingefädeltem Trageriemen deckungsgleich aneinander anliegen.

Durch eine derartige Ausbildung mit mehreren Ösenstücken, kann verhindert werden, dass der Trageriemen auch bei geeigneter Bewegung zur Ausfädelung aus einer Öse noch in der Vorrichtung, in der Regel sogar in allen Ösen verbleibt, da die weiteren Ösen eine Ausfädelbewegung verhindern. Dies ist insbesondere von Vorteil, wenn Ösen mit Durchführöffnungen ohne Sicherungselemente verwendet werden.

Zum Einfädeln wird der Gurt gegebenenfalls unter Knicken durch alle Durchführöffnungen in alle Ösen eingefädelt. Dazu können die Ösenstücke so angeordnet sein, dass Sie vom vorteilhaften Aneinanderangrenzen in eine Position bewegt werden können, in der Sie nicht mehr aneinander angrenzen. Dies ermöglicht ein Einfädeln ohne zu starkes Verknicken des Trageriemens.

Bei der Verwendung von zwei Ösenstücken werden vorteilhafterweise zwei identische Ösenstücke verwendet und so mit der flexiblen Verlängerung verbunden, dass sie spiegelverkehrt zu einander angeordnet sind.

### Kurze Beschreibung der Zeichnungen

Weitere Vorteile und Merkmale der Erfindung ergeben sich aus der nachfolgenden Beschreibung eines Ausführungsbeispiels anhand der beigefügten Figuren. Dabei zeigen:
Fig. 1 ein Ausführungsbeispiel einer erfindungsgemäßen Vorrichtung zum lösbaren Befestigen einer Kamera an einem Trageriemen mit geschlossener Durchführöffnung in schematischer Darstellung;
Fig. 2 in wiederum schematischer Darstellung die Vorrichtung aus Fig. 1 mit geöffneter Durchführöffnung;
Fig. 3a ein Ausführungsbeispiel einer erfindungsgemäßen Vorrichtung zum lösbaren Befestigen einer Kamera an einem Trageriemen mit steigbügelförmiger Öse in schematischer Darstellung;
Fig. 3b ein Ausführungsbeispiel einer erfindungsgemäßen Vorrichtung zum lösbaren Befestigen einer Kamera an einem Trageriemen mit rechteckiger Öse in schematischer Darstellung;
Fig. 4 ein Ausführungsbeispiel einer erfindungsgemäßen Vorrichtung zum lösbaren Befestigen einer Kamera an einem Trageriemen mit einer Öse mit einem steifen und einem flexiblen Abschnitt in schematischer Darstellung;
Fig. 5a, b je ein Ausführungsbeispiel einer erfindungsgemäßen Vorrichtung zum lösbaren Befestigen einer Kamera an einem Trageriemen mit geschlossener karabinerartigen Durchführöffnung in schematischer Darstellung; und
Fig. 6 ein Ausführungsbeispiel mit zwei Ösenstücken mit jeweils ungesicherter Durchführöffnung.

### Weg(e) zur Ausführung der Erfindung

In den Figuren sind in hohem Maße schematisch und keinesfalls maßstabsgerecht Ausführungsbeispiele für eine erfindungsgemäße Vorrichtung zum lösbaren Befestigen einer Kamera an einem Trageriemen dargestellt.

Die Vorrichtungen enthalten als wesentliche Bestandteile bzw. Baugruppen ein Ösenstück 1, eine flexible Verlängerung 2 und ein Befestigungselement 3 zum Festlegen an einer Befestigungseinrichtung der Kamera.

Das Ösenstück 1 weist eine Öse 4 auf, in deren Rand eine Durchführöffnung 5 belassen ist. Die Durchführöffnung 5.

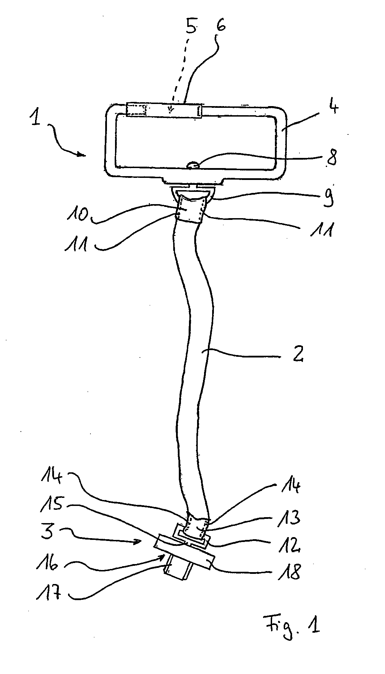

In Fig. 1 weist die Öse 4 einen recheckigen umlaufenden Rand auf und ist die Durchführöffnung 5 mittels einer Schiebehülse 6 verschlossen.

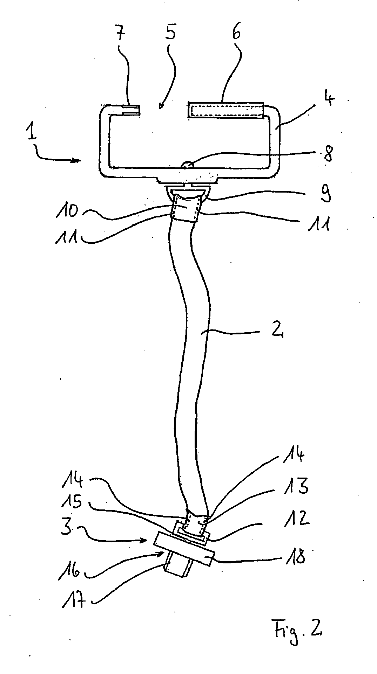

Im geöffneten Zustand der Durchführöffnung 5 (vgl. Fig. 2) ist die Schiebehülse 6 auf einen in der Figur rechts dargestellten Teil des Randes der Öse 4 aufgeschoben. Der der verschobenen Schiebehülse 6 entlang der Durchführöffnung 5 gegenüberliegende Abschnitt des Randes der Öse 4 weist an einem freien Ende ein Außengewinde 7 auf, welches korrespondierend zu einem in dem in der Figur links dargestellten Abschnitt der Schiebehülse 6 ausgebildeten Innengewinde (hier nicht gezeigt) gebildet ist und mit diesem in Eingriff gebracht werden kann. Zum Schließen der Durchführöffnung 5 kann die Schiebehülse 6 aus der in Fig. 2 gezeigten Stellung in die in Fig. 1 gezeigte Position überführt werden, indem diese zunächst in Längsrichtung verschoben und dann durch Schrauben auf das Außengewinde 7 mit letzterem in Eingriff gebracht wird.

An der Öse 4 ist über einen Zapfen 8 in dessen Längsrichtung verdrehbar eine Anschlagöse 9 festgelegt, die weiterer Bestandteil des Ösenstückes 1 ist. Durch diese Anschlagöse 9 ist ein erstes Ende der flexiblen Verlängerung 2 geführt und in einem Abschnitt 10 umgeschlagen und mit dem Rest der flexiblen Verlängerung 2 befestigt. Die flexible Verlängerung 2 ist hier ein textiles Band, wobei der umgelegte Abschnitt 10 über Nähte 11 mit dem darunterliegenden textilen Band vernäht und die flexible Verlängerung 2 so an der Anschlagöse 9 festgelegt ist.

Auch das Befestigungselement 3 weist eine Anschlagöse 12 auf, durch die ein Abschnitt 13 des die flexible Verlängerung 2 bildenden Bandes hindurchgeführt und umgelegt ist. Auch der Abschnitt 13 ist mit Nähten 14 mit dem darunter liegenden Band der flexiblen Verlängerung 2 vernäht und so befestigt. Die Anschlagöse 12 ist über einen Zapfen 15 in hier nicht näher dargestellter Weise gelenkig mit einem Schraubenstück 16 verbunden, so dass sich das Schraubenstück 16 um seine Längsachse frei relativ zu der Anschlagöse 12 verdrehen lässt.

Das Schraubenstück 16 weist einen Gewindeabschnitt 17 auf, dessen Außenabmessungen sowie Gewindezüge einer Standardstativschraube entsprechen und der somit in eine Stativschraubbuchse einer Kamera eingeschraubt werden kann. Am rückwärtigen Ende des Gewindeabschnittes 17 ist an diesen ein Griffabschnitt 18 angeformt, der einen kreisförmigen Außenquerschnitt aufweist und an seiner Außenfläche mit Riffelungen oder dgl. griffverstärkenden Strukturen ausgebildet sein kann (hier nicht näher gezeigt). Durch Ergreifen und Drehen des Griffabschnitts 18 kann der Gewindeabschnitt 17 des Schraubenstückes 16 in die Stativschraubenhülse einer Kamera eingeschraubt und die Vorrichtung insgesamt so mit der Kamera verbunden werden.

Es ist nun einleuchtend, dass die in den Figuren 1 und 2 in einem besonderen Ausführungsbeispiel gezeigte Vorrichtung auf einfache Weise über einen bestehenden Trageriemen, z.B. einen solchen einer Fototasche, einer Handtasche, einer Kuriertasche, einer Uniformkoppel oder dgl., oder auch über einen quer um den Körper gebundenen Schal oder eine Schärpe geführt und an diesem bzw. dieser festgelegt werden kann. Zu diesem Zwecke wird zunächst durch Verbringen der Schiebehülse 6 in die in Fig. 2 gezeigte Position die Durchführöffnung 5 geöffnet. Durch die Durchführöffnung 5 kann nun der Trageriemen in das Innere der Hülse 4 eingefädelt werden. Ist der Trageriemen so im Inneren der Hülse 4 angeordnet, wird die Schiebhülse 6 zum Verschließen der Durchführöffnung 5 in Richtung des mit dem Außengewinde 7 versehenen Endes bzw. Abschnittes des Randes der Öse 4 verschoben und schließlich mit dem nicht näher dargestellten Innengewinde auf das Außengewinde 7 aufgeschraubt. So entsteht die in Fig. 1 dargestellte, sicher verschlossene Position, in der die erfindungsgemäße Vorrichtung sicher an dem Trageriemen angeordnet ist. Nun kann, wenn dies zuvor noch nicht geschehen war, das Befestigungselement 3 durch Einschrauben des Gewindeabschnittes 17 in eine Stativschraubenbuchse der Kamera mit einer solchen Kamera verbunden werden. Die Vorrichtung ist nun betriebsbereit, in einer Ruheposition kann die Kamera z.B. seitlich des Körpers im Bereich der an dem Trageriemen befestigten Tasche oder eines ähnlichen Utensils getragen werden. Soll eine Aufnahme mit der Kamera gemacht werden, kann diese ergriffen und nach oben vor das Gesicht der die Vorrichtung nutzenden Person geführt werden. Dabei wird nur die flexible Verlängerung 2, das Ösenstück 1 mit der Öse 4 gleitend über den Trageriemen geführt bis zu einer Position, in der überbrückt durch die flexible Verlängerung 2 die Kamera "schussbereit" vor dem Gesicht gehalten wird.

In dem gezeigten Ausführungsbeispiel ist die Öse mit einer durch eine Schiebhülse 6 zu verschließenden Durchführöffnung 5 gezeigt. Es ist für den Fachmann klar ersichtlich, dass hier andere Arten eines Verschlussmechanismus gewählt werden können, z.B. ein solcher nach Art eines Karabinerhakens, in Form von nach Art eines Schlüsselringes überlappenden Enden oder dgl. Auch ist es möglich, die Durchführöffnung 5 derart schmal in ihrer Öffnungsweite zu gestalten, dass ein Trageriemen nur seiner Dicke nach mit der Schmalkante hindurchgeführt bzw. gefädelt werden kann, anschließend jedoch keinerlei Gefahr besteht, dass der Trageriemen ungewollt aus dem Inneren der Öse 4 durch die Durchführöffnung wieder hinausgelangt.

In der Figur nicht dargestellt, allerdings einfach hinzuzufügen, ist eine Möglichkeit zur Längenverstellung der flexiblen Verlängerung 2. Dies kann z.B. durch ein Schnallensystem ähnlich eines Gürtels oder eines Schnallenverschlusses einer Armbanduhr geschehen. Auch sind andere, gängige Längenverstellmöglichkeiten für Riemen hier einsetzbar.

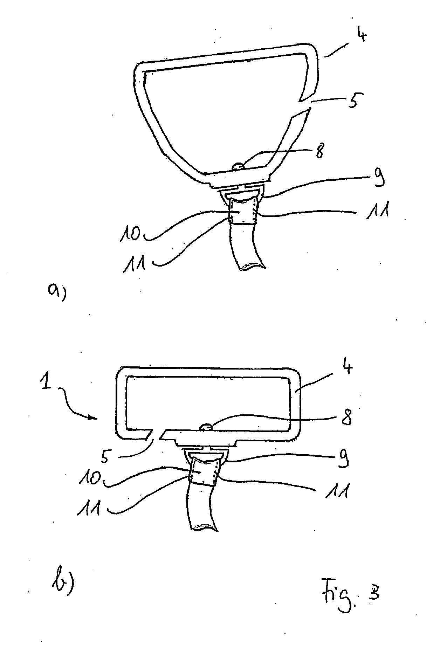

Fig. 3a zeigt in Abweichung von den Figuren 1 und 2 eine steigbügelartige Öse 4 mit ungesicherter Durchführöffnung 5 zum seitlichen Einschieben eines Trageriemens.

Fig. 3b zeigt die Vorrichtung aus Fig. 2 ausschnittsweise, jedoch mit einer ungesicherten Durchführöffnung 5, auf der vom Träger abgewandten Seite der Öse angeordnet ist. Dies ermöglicht eine ungesicherte Durchgangsöffnung bei vergleichsweise hoher Sicherheit zu nutzen.

Die in den Figuren 3a und 3b gezeigten Ösenstücke eigenen sich besonders für eine Vorrichtung mit zwei Ösenstücken.

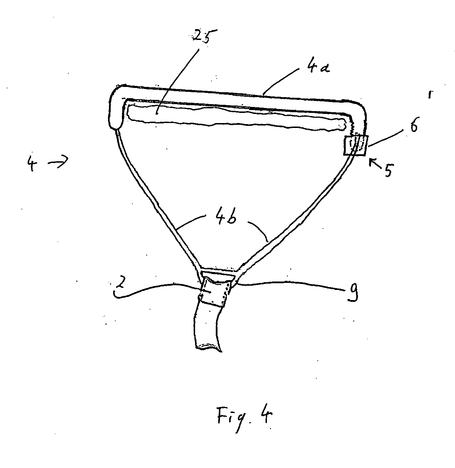

Fig. 4 zeigt einen Ausschnitt einer Vorrichtung wie in den vorstehenden Figuren, jedoch mit einer Öse 4 mit einem geraden und steifen Abschnitt 4a und einem flexiblen Abschnitt 4b. Der Flexible Abschnitt 4b weist eine Anschlagöse 9 zur Verbindung mit der flexiblen Verlängerung 2 auf.

Der gerade und steife Abschnitt 4a weist ein seinen Enden jeweils eine Biegung auf, die das geführte Gleiten entlang eines Trageriemens 25 unterstützen.

An dem Ende einer der Biegungen ist ein Ende des flexiblen Abschnitts 4b fest verbunden. Das andere Ende des flexiblen Abschnitts ist lösbar mit dem Ende der zweiten Biegung verbunden. Die Biegung weist dazu ein sich zum Ende der Biegung verjüngendes Langloch auf, durch das das zweite Ende des flexiblen Abschnitts hindurchgezogen werden kann. Um ein Herausrutschen des Endes zu verhindern ist das Ende mit einer Verdickung versehen und ist an der zweiten Biegung ein Gewinde und eine Schiebehülse 6 mit passendem Gewinde vorgesehen, durch die der zweite Ende des flexiblen Abschnitts beim Bewegen der Schiebehülse 6 verklemmt wird. So kann sich das zweite Ende des flexiblen Abschnitts 4b nicht unbeabsichtigt aus dem Langloch herausbewegen. Zum Einlegen des Trageriemens wird die Verbindung gelöst.

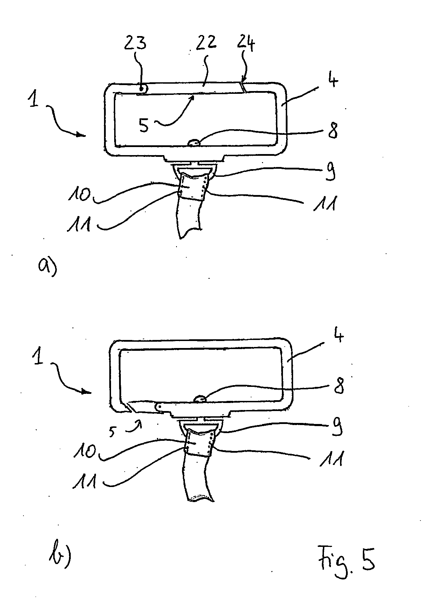

In Fig. 5a ist eine Öse gezeigt, bei der die Durchführöffnung 5 nach Art eines Karabinerhakens von einem durch Federspannung in seine Verschlussstellung vorgespannten Verschlussbügel 22 verschlossen ist. Dieser ist an dem festen Rahmen der Öse 4 über ein Gelenk 23 angebunden und kann zum Öffnen der Durchführöffnung 5 in das Innere der Öse 4 hinein verschwenkt werden. Ein Anschlag 24 verhindert ein Überschwenken des Verschlussbügels 22.

In Fig. 5b ist die Durchführöffnung 5 ebenfalls wie in Fig. 5a mit einem vorgespanntem Verschlussbügel 22 ausgeführt, jedoch an der anderen Seite der Öse angeordnet, so dass sie nicht zwischen Trageriemen und Träger zu liegen kommt.

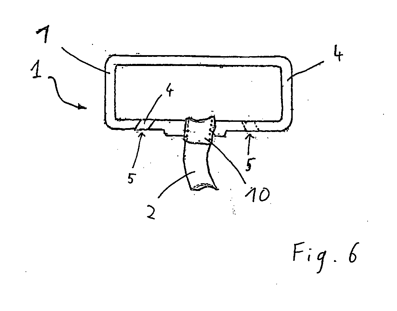

Fig. 6 zeigt einen Ausschnitt einer Ausführungsform mit zwei Ösenstücken 1, die aneinander angrenzen. Da die Ösenstücke 1 in der gezeigten Ansicht übereinanderliegen ist das untere Ösenstück nur an der Stelle der Durchführöffnung 5 der oberen Öse 4 zu erkennen. Die Durchführöffnung der unteren Öse ist gestrichelt angedeutet. Die Ösenstücke 1 werden gehalten durch einen zu einer Schlaufe verarbeiteten umgelegten Abschnitt 10 der flexiblen Verlängerung 2. Sie sind darin drehbar, so dass sie voneinander getrennt werden können, um den Trageriemen nacheinander in beide Ösen 4 einzufädeln.

Aus der vorstehenden Beschreibung ist noch einmal deutlich geworden, welchen Vorteil die erfindungsgemäße Vorrichtung mit sich bringt, indem sie ein hohes Maß an Flexibilität gestattet und das Tragen einer Kamera unter Rückgriff auf einen existenten, im anderen Zusammenhang genutzten Trageriemen, z.B. einen solchen einer Kameratasche, einer Handtasche oder dgl., erlaubt.

### Bezugszeichenliste

- 1: Ösenstück
- 2: flexible Verlängerung
- 3: Befestigungselement
- 4: Öse
- 4a: steifer Ösenabschnitt
- 4b: flexibler Ösenabschnitt
- 5: Durchführöffnung
- 6: Schiebehülse
- 7: Außengewinde
- 8: Zapfen
- 9: Anschlagöse
- 10: umgeschlagener Abschnitt
- 11: Naht
- 12: Anschlagöse
- 13: umgeschlagener Abschnitt
- 14: Naht
- 15: Zapfen
- 16: Schraubenstück
- 17: Gewindeabschnitt
- 18: Griffabschnitt
- 22: Verschlussbügel
- 23: Gelenk
- 24: Anschlag
- 25: Trageriemen

## Patentansprüche

1. Vorrichtung zum lösbaren Befestigen einer Kamera an einem Trageriemen (25), vorzugsweise einem quer über einer Schulter zu tragenden Trageriemen (25), mit einem Ösenstück (1) mit mindestens einer Öse (4) zum Verbinden mit dem Trageriemen und zum gleitenden Verschieben auf demselben, einer an dem Ösenstück (1) festgelegten flexiblen Verlängerung (2) sowie einem an dem Ösenstück (1) abgewandten Ende der flexiblen Verlängerung (2) angeordneten eine als Schraube (16) zum Einschrauben in eine Stativschraubenhülse der Kamera ausgeführtes Befestigungselement (3), wobei die mindestens eine Öse (4) in ihrem umlaufenden Rand eine Durchführöffnung (5) aufweist, durch die der Trageriemen (25) in die Öse (4) eingefädelt werden kann und die entweder verschließbar oder derart klein dimensioniert ist, dass der seitlich in die mindestens eine Öse (4) eingefädelte Trageriemen nicht unbeabsichtigt durch die Durchführöffnung (5) aus der mindestens einen Öse (4) heraus gelangen kann.

2. Vorrichtung nach Anspruch 1, wobei die Durchführöffnung (5) zum seitlichen einfädeln des Trageriemens (25) in die Öse (4) ausgebildet ist.

3. Vorrichtung nach einem der vorstehenden Ansprüche, wobei der umlaufende Rand einen geraden und steifen Abschnitt (4a) aufweist, der so angeordnet ist, dass der gerade und steife Abschnitt (4a) bei eingefädeltem Trageriemen (25) auf der von der flexiblen Verlängerung (2) abgelegenen Seite des Trageriemens zu liegen kommt.

4. Vorrichtung nach Anspruch 3, wobei die Durchführöffnung (5) nicht auf dem geraden und steifen Abschnitt (4a) angeordnet ist.

5. Vorrichtung nach einem der vorstehenden Ansprüche, **dadurch gekennzeichnet, dass** der umlaufenden Rand steif ist.

6. Vorrichtung nach Anspruch 1, **dadurch gekennzeichnet, dass** die Öse (4) eine nach Art eines Karabiners verschließbare Durchführöffnung (5) aufweist, wobei der Karabiner in das Innere der Öse öffnet und in Richtung einer Schließstellung federbelastet ist.

7. Vorrichtung nach einem der vorstehenden Ansprüche, **dadurch gekennzeichnet, dass** die Öse (4) im Bereich der Durchführöffnung (5) eine Schiebehülse (6) aufweist, die zum Öffnen und Schließen der Durchführöffnung (5) entlang ihrer Längsrichtung verschiebbar ist und in einer Schließstellung, in der sie die Durchführöffnung (5) überquerend verschließt, fixierbar ist.

8. Vorrichtung nach Anspruch 7, **gekennzeichnet durch** korrespondierende Gewinde (7) im Innern der Schiebehülse (6) und auf wenigstens einem der sich an die Durchführöffnung (5) anschließenden Abschnitte der Öse (4) zum Verschrauben der Schiebehülse (6) mit wenigstens einem der sich an die Durchführöffnung (5) anschließenden Abschnitte der Öse (5) in der Schließstellung.

9. Vorrichtung nach einem der Ansprüche 1 bis 6, **dadurch gekennzeichnet, dass** die Öse mit zwei offenen Enden ausgebildet ist, die sich überlappend aufeinander liegen und von einer Federspannung in eine Schließstellung gegeneinander gedrückt, zum Öffnen der Durchführöffnung aber gegeneinander spreizbar sind.

10. Vorrichtung nach einem der vorhergehenden Ansprüche, **dadurch gekennzeichnet, dass** die Öse (4) eine im wesentlichen rechteckige Form aufweist.

11. Vorrichtung nach einem der vorhergehenden Ansprüche, **dadurch gekennzeichnet, dass** die flexible Verlängerung (2) ein Band oder Riemen ist.

12. Vorrichtung nach einem der vorhergehenden Ansprüche, **dadurch gekennzeichnet, dass** die flexible Verlängerung (2) eine Länge zwischen 5 cm und 35 cm aufweist, insbesondere zwischen 10 cm und 15 cm.

13. Vorrichtung nach einem der vorhergehenden Ansprüche, **dadurch gekennzeichnet, dass** zwischen der Schraube (16) und der flexiblen Verlängerung (2) ein Drehgelenk (15), insbesondere ein Kugellager, so angeordnet ist, dass es ein freies Verdrehen des flexiblen Elements (2) gegenüber der Schraube (16) erlaubt.

14. Vorrichtung nach einem der vorstehenden Ansprüche, **dadurch gekennzeichnet, dass** zwei Ösenstücke vorgesehen sind und die Durchführöffnungen der zwei Ösen so angeordnet sind, dass der Trageriemen zum Ausfädeln in zwei verschiedene Richtungen bewegt werden müsste.

15. Vorrichtung nach Anspruch 14, **dadurch gekennzeichnet, dass** die zwei Ösenstücke bei eingefädeltem Trageriemen aneinander angrenzen.

## Claims

1. A device for detachable fastening of a camera on the neck strap (25), preferably a neck strap (25) to be worn transversally to a shoulder, having an eyelet piece (1) with at least one eyelet (4) for connection with the neck strap and to slide along on the same, a flexible extension (2) fixed to the eyelet piece (1) as well as a fastening element (3), arranged on the end of the flexible extension (2), facing away from the eyelet piece, designed as a screw (16) for screwing into a tripod screw sleeve of the camera, whereas said at least one eyelet (4) exhibits a through-opening (5) on its peripheral rim, through which the neck strap (25) can be inserted into the eyelet (4) and which is either closable or is sized small enough so that the neck strap inserted laterally into said at least one eyelet (4) cannot reach into the through-opening (5) unintentionally from said at least one eyelet (4).

2. The device according to claim 1, whereas the through-opening (5) is designed for lateral insertion of the neck strap (25) into the eyelet (4).

3. The device according to one of the previous claims, whereas the peripheral rim has a straight and rigid section (4a), which is arranged in such a way that the straight and rigid section (4a), once the neck strap (25) has been inserted, comes to rest on the side of the neck strap away from the flexible extension (2).

4. The device according to claim 3, whereas the through-opening (5) is not arranged on the straight and rigid section (4a).

5. The device according to one of the previous claims, **characterised in that** the peripheral rim is rigid.

6. The device according to claim 1, **characterised in that** the eyelet (4) has a through-opening (5) which can be closed as a snap hook, whereas the snap hook opens into the inside of the eyelet and is spring-loaded in the direction of a closed position.

7. The device according to one of the previous claims, **characterised in that** the eyelet (4) has a sliding sleeve (6) in the region of the through-opening, which can be moved along its longitudinal direction for opening and closing the through-opening and can be fixed in a closed position, in which it closed hermetically the through-opening (5) traversally.

8. The device according to claim 7, **characterised by** corresponding threads (7) inside the sliding sleeve (6) and on at least one of the sections of the eyelet (4) connected to the through-opening (5) for screwing the sliding sleeve (6) with at least one of the sections of the eyelet (5) connected to the through-opening (5) in the closed position.

9. The device according to one of the claims 1 to 6, **characterised in** the eyelet is designed with two open ends, which overlap each other and can be pushed against each other by a spring tension into a closed position or can be spread against each other for opening the through-opening.

10. The device according to one of the preceding claims, **characterised in that** the eyelet (4) has a substantially rectangular shape.

11. The device according to one of the preceding claims, characterised that the flexible extension (2) is a strip or a belt.

12. The device according to one of the preceding claims, **characterised in that** the flexible extension (2) has a length between 5 cm and 35 cm, in particular between 10 cm and 15 cm.

13. The device according to one of the preceding claims, **characterised in that** a swivel joint (15), in particular a ball bearing, is arranged between the screw (16) and the flexible extension (2) in such a way that it enables a free rotation of the flexible elements (2) with respect to the screw (16).

14. The device according to one of the previous claims, characterised that two eyelet pieces are arranged and the through-openings of both eyelets are arranged so that the neck strap should be moved in two different directions.

15. The device according to claim 14, **characterised in that** both eyelet pieces are adjoining each other with an inserted neck strap.

## Revendications

1. Dispositif pour fixation amovible d'une caméra sur la sangle de cou (25), de préférence une sangle de cou (25) à porter de manière transversale par rapport à l'épaule, comportant une partie oeillet (1) avec au moins un oeillet (4) pour se raccorder à la sangle de cou et coulisser le long de celle-ci, une rallonge flexible (2) fixée à la partie oeillet (1) de même qu'un élément de fixation (3), disposé à l'extrémité de la rallonge flexible (2), tournant le dos à la partie oeillet, conçu comme vis (16) pour se visser dans une douille à vis pour tripode de la caméra, où ledit au moins un oeillet (4) présente une ouverture traversante (5) en son rebord périphérique, à travers lequel on peut introduire la sangle de cou (25) dans l'oeillet (4) et que l'on peut fermer ou bien qui est suffisamment petit pour que la sangle de cou introduite latéralement dans ledit au moins un oeillet (4) ne puisse pas pénétrer dans l'ouverture traversante (5) de manière involontaire à partir dudit au moins oeillet (4).

2. Dispositif selon la revendication 1, où l'ouverture traversante (5) est conçue pour une introduction latérale de la sangle de cou (25) à l'intérieur de l'oeillet (4).

3. Dispositif selon l'une des revendications précédentes, où le rebord périphérique présente une section droite et rigide (4a), qui est disposée de telle sorte que la section droite et rigide (4a), après introduction de la sangle de cou (25), vient reposer sur le côté de la sangle de cou, à l'écart de la rallonge flexible (2).

4. Dispositif selon la revendication 3, où l'ouverture traversante (5) n'est pas disposée sur la section droite et rigide (4a).

5. Dispositif selon l'une des revendications précédentes, **caractérisé en ce que** le rebord périphérique est rigide.

6. Dispositif selon la revendication 1, **caractérisé en ce que** l'oeillet (4) comporte une ouverture traversante (5) que l'on peut refermer comme un mousqueton, où le mousqueton s'ouvre vers l'intérieur de l'oeillet et est monté sur ressort dans la direction d'une position fermée.

7. Dispositif selon l'une des revendications précédentes, **caractérisé en ce que** l'oeillet (4) comporte un manchon coulissant (6) dans la zone de l'ouverture traversante, qui peut se déplacer dans sa direction longitudinale pour ouvrir et refermer l'ouverture traversante et peut être fixé dans une position fermée, dans laquelle il referme hermétiquement l'ouverture traversante (5) de manière traversante.

8. Dispositif selon la revendication 7, **caractérisé par** des filets correspondants (7) à l'intérieur du manchon coulissant (6) et sur au moins l'une des sections de l'oeillet (4) connectées à l'ouverture traversante (5) pour visser le manchon coulissant (6) avec au moins l'une des sections de l'oeillet (5) connectées à l'ouverture traversante (5) en position fermée.

9. Dispositif selon l'une des revendications 1 à 6, **caractérisé en ce que** l'oeillet est conçu avec deux extrémités ouvertes, qui se chevauchent et peuvent être comprimées l'une contre l'autre par une tension de ressort pour atteindre une position fermée ou peuvent être écartées l'une contre l'autre pour ouvrir l'ouverture traversante.

10. Dispositif selon l'une des revendications précédentes, caractérisé en que l'oeillet (4) présente une forme plus ou moins rectangulaire.

11. Dispositif selon l'une des revendications précédentes, **caractérisé en ce que** la rallonge flexible (2) est une bande ou une courroie.

12. Dispositif selon l'une des revendications précédentes, **caractérisé en ce que** la rallonge flexible (2) est d'une longueur comprise entre 5 cm et 35 cm, en particulier entre 10 cm et 15 cm.

13. Dispositif selon l'une des revendications précédentes, **caractérisé en ce qu'**un joint à rotule (15), en particulier un roulement à billes, est disposé entre la vis (16 et la rallonge flexible (2) de façon à permettre une rotation libre des éléments flexibles (2) par rapport à la vis (16).

14. Dispositif selon l'une des revendications précédentes, **caractérisé en ce que** deux parties oeillet sont prévues et que les ouvertures traversantes des deux oeillets sont disposées pour que la sangle de cou puisse se mouvoir dans deux direction.

15. Dispositif selon la revendication 14, **caractérisé en ce que** les deux parties oeillet se jouxtent avec une sangle de cou introduite.
